(19) Europäisches Patentamt / European Patent Office / Office européen des brevets

(11) EP 2 526 161 B1

(12) **EUROPEAN PATENT SPECIFICATION**

(45) Date of publication and mention of the grant of the patent: **15.07.2015 Bulletin 2015/29**

(21) Application number: **11734286.5**

(22) Date of filing: **21.01.2011**

(51) Int Cl.:
***C09K 8/68*** *(2006.01)* ***C09K 8/22*** *(2006.01)*
***C09K 8/575*** *(2006.01)* ***C09K 8/80*** *(2006.01)*

(86) International application number: **PCT/CA2011/000065**

(87) International publication number: **WO 2011/088556 (28.07.2011 Gazette 2011/30)**

(54) **COMPOSITIONS AND METHODS FOR ENHANCING FLUID RECOVERY FOR HYDRAULIC FRACTURING TREATMENTS**

ZUSAMMENSETZUNGEN UND VERFAHREN ZUR VERSTÄRKUNG EINER FLUIDGEWINNUNG FÜR BEHANDLUNGEN DURCH HYDRAULISCHE FRAKTURIERUNG

COMPOSITIONS ET PROCÉDÉS POUR AUGMENTER LA RÉCUPÉRATION DE FLUIDE POUR DES TRAITEMENTS DE FRACTURE HYDRAULIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.01.2010 CA 2690768**

(43) Date of publication of application: **28.11.2012 Bulletin 2012/48**

(73) Proprietor: **Trican Well Service Ltd.**
**Calgary, Alberta T2P 4G8 (CA)**

(72) Inventor: **ZHANG, Kewei**
**Calgary, Alberta T2P 4G8 (CA)**

(74) Representative: **Johnson, Stephen William et al**
**Venner Shipley LLP**
**Byron House**
**Cambridge Business Park**
**Cowley Road**
**Cambridge CB4 0WZ (GB)**

(56) References cited:
**WO-A1-2005/124099**
**WO-A1-2006/116868**
**WO-A1-2008/131540**
**WO-A1-2008/131540**
**WO-A2-2007/033489**
**WO-A2-2007/145734**
**CA-A1- 1 250 856**
**CA-A1- 2 009 732**
**CA-A1- 2 708 144**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 526 161 B1

## Description

### FIELD

This invention relates to a method of altering the wettability of a subterranean formation. Also described herein in relation to the method of the invention are hydraulic fracturing techniques in general and fluid flowback compositions for hydraulic fracturing in particular.

### BACKGROUND

Hydraulic fracturing operations are used routinely to increase oil and gas production. In a hydraulic fracturing process, a fracturing fluid is injected through a wellbore into a subterranean formation at a pressure sufficient to initiate a fracture to increase oil and gas production. Frequently, particulates, called proppants, are suspended in the fracturing fluid and transported into the fracture as slurry. For example, international patent applications WO 2006/116868 and WO 2007/033489 both disclose aqueous slurry compositions comprising water, particulates and a chemical compound for rendering the surface of the particulates extremely hydrophobic. WO 2008/131540 discloses a similar composition further comprising an oil. Proppants include sand, resin coated proppant, ceramic particles, glass spheres, bauxite (aluminum oxide), and the like. Among them, sand is by far the most commonly used proppant. Fracturing fluids in common use include various aqueous and hydrocarbon fluids. Liquid carbon dioxide and nitrogen gas are occasionally used in fracturing treatments. The most commonly used fracturing fluids are aqueous fluids containing polymers, either linear or cross-linked, to initiate fractures in the formation and effectively transport proppants into the fractures.

In the past few years, water or water containing a small amount of friction reducer, has been widely used in tight formations including shale formations. Aqueous fluids gelled by viscoelastic surfactants are also commonly used. At the last stage of a fracturing treatment, fracturing fluid is flowed back to surface and proppants are left in the fracture to prevent it from closing back after pressure is released. The proppant-filled fracture provides a high conductive channel that allows oil and/or gas to seep through to the wellbore more efficiently. The conductivity of the proppant pack plays an important role in increasing oil and gas production.

After a treatment, a large portion of the fluid is trapped in the formation and which cannot be flowed back to the surface. It is known that the success of a fracturing treatment is closely related to the amount of the fracturing fluid recovered after the treatment. Normally, the more fracturing fluid that is recovered, the higher the production of the well after the treatment.

Recovery of the fluid depends on several factors and among them capillary pressure is one of the most important. The capillary pressure $\Delta p$ is governed by a simple, albeit somewhat approximate, relation as shown in the following equation:

$$\Delta p = \frac{2\sigma}{r}\cos\theta \qquad \text{(I)}$$

where $\sigma$ represents the surface tension of fluid, $r$ the radius of pore and $\theta$ the contact angle. For a certain formation, pore size, i.e., $r$ is constant, and therefore there are only two parameters, namely $\sigma$ any $\theta$, are left to be adjusted in order to manipulate the capillary pressure.

Currently, the most common method is to add surfactants to the fracturing fluid to reduce the surface tension $\sigma$, and thus the capillary pressure $\Delta p$, and consequently, the resistence to flowback. The limitation of the approach is that it is very hard to reduce the surface tension of an aqueous fluid to be under 0.03 N/m (30 dyne/cm).

### SUMMARY

The invention provides a method of altering the wettability of a subterranean formation comprising the steps of providing a fracturing pad fluid that does not contain a proppant with a flowback enhancing agent (FEA); and introducing the fracturing pad fluid into a subterranean formation whereby the wettability of the formation is altered, wherein the FEA is selected from a group consisting of organosiloxane, organosilane, fluoro-organosiloxane, fluoro-organosilane, and fluorocarbon compounds. The fracturing pad fluid contains a sufficient amount of an FEA to alter the wettability of the formation when the fracturing pad fluid contacts the formation. The wettability of the formation can be altered by changing the contact angle of the formation. The contact angle of the formation can be altered to be about or greater than 90°. The wettability of the formation can be altered such that a fluid contacting the formation is repelled by the formation. The fluid can be a fracturing fluid. The fracturing pad fluid does not contain a proppant. The FEA can be a suitable organosilicon compound selected from the group consisting of organosiloxane, organosilane, fluoro-organosiloxane and fluoro-organosilane compounds. The fracturing pad fluid used in the present invention can further comprise nanoparticles.

## DESCRIPTION

In one or more embodiments of this invention, the method enhances fluid recovery by manipulating the capillary force through changing the contact angle. It is found that when a flowback enhancing agent "(FEA)", that can make the contact angle approximately equal or larger than 90°, is added to a fracturing fluid, the fluid recovery can be enhanced significantly.

Referring to equation (I), one can also manipulate the capillary pressure by changing the contact angle $\theta$, .i.e., the wettability. By changing the contact angle, the capillary pressure can be greatly changed. For example, when the contact angle becomes 90°, cos $\theta$ becomes zero, so does the capillary pressure, or when the contact angle is larger than 90°, cos$\theta$ becomes negative meaning the fluid, such as an aqueous fracturing fluid, is repelled by the pores in a subterranean formation.

In one or more embodiments of this invention, a sufficient amount of a FEA is added to a fluid and the fluid is then injected into a subterranean formation. The fluid is a fracture pad fluid which is an initial part of a fracture fluid that creates a fracture but contains no proppant. Such a fracturing pad fluid when introduced into a subterranean formation can alter the wettability of pores in the formation by changing the contact angle$\theta$. A fracture fluid with proppant can then be introduced into the formation. The fracture fluid can optionally contain a FEA.

There are various types of FEA that can be used in the method of the present invention, including organosilicon compounds selected from the group consisting of organosiloxane, organosilane, fluoro-organosiloxane and fluoro-organosilane compounds. See also United States Patent Nos. 4,537,595; 5,240,760; 5,798,144; 6,323,268; 6,403,163; 6,524,597 and 6,830,811 which disclose organosilicon compounds. The selection of organosilicon compounds suitable for the present invention from the aforementioned references can be made by one of ordinary skill in the art through routine testing.

Organosilanes are compounds containing silicon to carbon bonds. Organosiloxanes are compounds containing Si-O-Si bonds. Polysiloxanes are compounds in which the elements silicon and oxygen alternate in the molecular skeleton, i.e., Si-O-Si bonds are repeated. The simplest polysiloxanes are polydimethylsiloxanes.

Polysiloxane compounds can be modified by various organic substitutes having different numbers of carbons, which may contain N, S, or P moieties that impart desired characteristics. For example, cationic polysiloxanes are compounds in which one or more organic cationic groups are attached to the polysiloxane chain, either at the middle or the end. The organic cationic group may also contain a hydroxyl group or other functional groups containing N or O. The most common organic cationic groups are alkyl amine derivatives including primary, secondary, tertiary and quaternary amines (for example, quaternary polysiloxanes including, quaternary polysiloxanes including mono- as well as, di-quaternary polysiloxanes, amido quaternary polysiloxanes, imidazoline quaternary polysiloxanes and carboxy quaternary polysiloxanes.

Similarly, the polysiloxane can be modified by organic amphoteric groups, where one or more organic amphoteric groups are attached to the polysiloxane chain, either at the middle or the end, and include betaine polysiloxanes and phosphobetaine polysiloxanes.

Similarly, the polysiloxane can be modified by organic anionic groups, where one or more organic anionic groups are attached to the polysiloxane chain, either at the middle or the end, including sulfate polysiloxanes, phosphate polysiloxanes, carboxylate polysiloxanes, sulfonate polysiloxanes, thiosulfate polysiloxanes. The organosiloxane compounds also include alkylsiloxanes including hexamethylcyclotrisiloxane, octamethylcyclotetrasiloxane, decamethylcyclopentasiloxane, hexamethyldisiloxane, hexaethyldisiloxane, 1,3-divinyl-1,1,3,3-tetramethyldisiloxane, octamethyltrisiloxane, decamethyltetrasiloxane.

The organosilane compounds include alkylchlorosilane, for example methyltrichlorosilane, dimethyldichlorosilane, trimethylchlorosilane, octadecyltrichlorosilane; alkyl- alkoxysilane compounds, for example methyl-, propyl-, isobutyl- and octyltrialkoxysilanes, cationic silanes including amine silanes.

Other types of chemical compounds, which are not organosilicon compounds, which can be used are fluorocarbon compounds including amphoteric and cationic fluoro-organic compounds. These compounds have been widely used to make solid surface not only hydrophobic but also oleophobic.

Further information regarding organosilicon compounds can be found in "Silicone Surfactants" (Randal M. Hill, 1999) and the references therein, and in United States Patent Nos. 4,046,795; 4,537,595; 4,564,456; 4,689,085; 4,960,845; 5,098,979; 5,149,765; 5,209,775; 5,240,760; 5,256,805; 5,359,104; 6,132,638 and 6,830,811 and Canadian Patent No. 2,213,168 which disclose organosilicon compounds. The selection of organosilicon compounds suitable for the present invention from the aforementioned references can be made by one of ordinary skilled in the art through routine testing.

Organosilanes can be represented by the formula

$R_nSiX_{(4-n)}$ (II)

wherein R is an organic radical having 1-50 carbon atoms that may posses functionality containing N, S, or P moieties that imparts desired characteristics, X is a halogen, alkoxy, acyloxy or amine and n has a value of 0-3. Examples of organosilanes include:

$CH_3SiCl_3$, $CH_3CH_2SiCl_3$, $(CH_3)_2SiCl_2$, $(CH_3CH_2)_2SiCl_2$; $(C_6H_5)_2SiCl_2$, $(C_6H_5)SiCl_3$, $(CH_3)_3SiCl$, $CH_3HSiCl_2$, $(CH_3)_2HSiCl$, $CH_3SiBr_3$, $(C_6H_5)SiBr_3$, $(CH_3)_2SiBr_2$, $(CH_3CH_2)_2SiBr_2$, $(C_6H_5)_2SiBr_2$, $(CH_3)_3SiBr$, $CH_3HSiBr_2$ $(CH_3)_2HSiBr$, $Si(OCH_3)_4$, $CH_3Si(OCH_3)_3$, $CH_3S_1(OCH_2CH_3)_3$, $CH_3Si(OCH_2CH_2CH_3)_3$, $CH_3Si[O(CH_2)_3CH_3]_3$, $CH_3CH_2Si(OCH_2CH_3)_3$, $C_6H_5Si(OCH_3)_3$, $C_6H_5CH_2Si(OCH_3)_3$, $C_6H_5Si(OCH_2CH_3)_3$, $CH_2{=}CHCH_2Si(OCH_3)_3$, $(CH_3)_2Si(OCH_3)_2$, $(CH_2{=}CH)Si(CH_3)_2Cl$, $(CH_3)_2Si(OCH_2CH_3)_2$ $(CH_3)_2Si(OCH_2CH_2CH_3)_2$, $(CH_3)_2Si[O(CH_2)_3CH_3]_2$, $(CH_3CH_2)_2Si(OCH_2CH_3)_2$, $(C_6H_5)_2Si(OCH_3)_2$, $(C_6H_5CH_2)_2Si(OCH_3)_2$, $(C_6H_5)_2Si(OCH_2CH_3)_2$, $(CH_2{=}CH)_2Si(OCH_3)_2$, $(CH_2{=}CHCH_2)_2Si(OCH_3)_2$ $(CH_3)_3SiOCH_3$, $CH_3HSi(OCH_3)_2$, $(CH_3)_2HSi(OCH_3)$, $CH_3Si(OCH_2CH_2CH_3)_3$, $CH_2{=}CHCH_2Si(OCH_2CH_2OCH_3)_3$, $(C_6H_5)_2Si(OCH_2CH_2OCH_3)_2$, $(CH_3)_2Si(OCH_2CH_2OCH_3)_2$, $(CH_2{=}CH)_2Si(OCH_2CH_2OCH_3)_2$, $(CH_2{=}CHCH_2)_2Si(OCH_2CH_2OCH_3)_2$, $(C_6H_5)_2Si(OCH_2CH_2OCH_3)_2$, $CH_3Si(CH_3COO)_3$, 3-aminotriethoxysilane, methyldiethylchlorosilane, butyltrichlorosilane, diphenyldichlorosilane, vinyltrichlorosilane, methyltrimethoxysilane,
vinyltriethoxysilane, vinyltris(methoxyethoxy)silane, methacryloxypropyltrimethoxysilane, glycidoxypropyltrimethoxysilane, aminopropyltriethoxysilane, divinyldi-2-methoxysilane, ethyltributoxysilane, isobutyltrimethoxysilane, hexyltrimethoxysilane, n-octyltriethoxysilane, dihexyldimethoxysilane, octadecyltrichlorosilane, octadecyltrimethoxysilane, octadecyldimethylchlorosilane, octadecyldimethylmethoxysilane and quaternary ammonium silanes including 3-(trimethoxysilyl)propyldimethyloctadecyl ammonium chloride, 3-(trimethoxysilyl)propyldimethyloctadecyl ammonium bromide, 3-(trimethylethoxysilylpropyl)didecylmethyl ammonium chloride, triethoxysilyl soyapropyl dimonium chloride, 3-(trimethylethoxysilylpropyl)didecylmethyl ammonium bromide, 3-(trimethylethoxysilylpropyl)didecylmethyl ammonium bromide, triethoxysilyl soyapropyl dimonium bromide, $(CH_3O)_3Si(CH_2)_3P^+(C_6H_5)_3Cl^-$, $(CH_3O)_3Si(CH_2)_3P{+}(C_6H_5)_3Br{-}$, $(CH_3O)_3Si(CH_2)_3P^+(CH_3)_3Cl^-$, $(CH_3O)_3Si(CH_2)_3P^+(C_6H_{13})_3Cl^-$, $(CH_3O)_3Si(CH_2)_3N^+(CH_3)_2C_4H_9Cl^-$, $(CH_3O)_3Si(CH_2)_3N^+(CH_3)_2CH_2C_6H_5Cl^-$, $(CH_3O)_3Si(CH_2)_3N^+(CH_3)_2CH_2CH_2OHCl^-$, $(CH_3O)_3Si(CH_2)_3N^+(C_2H_5)_3Cl^-$, $(C_2H_5O)_3Si(CH_2)_3N^+(CH_3)_2C_{18}H_{37}Cl^-$.

Among different organosiloxane compounds which are useful for the present invention, polysiloxanes modified with organic amphoteric or cationic groups including organic betaine polysiloxanes and organic amine polysiloxanes where the amine group can be primary, secondary, tertiary and quaternary amines. One type of betaine polysiloxane or quaternary polysiloxane is represented by the formula

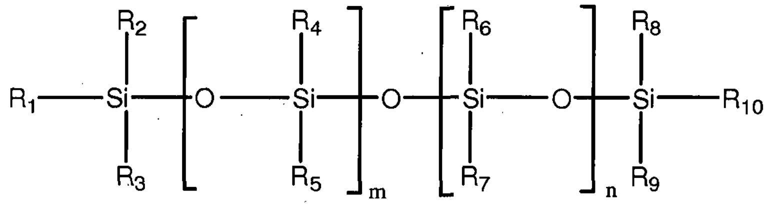

(III)

wherein each of the groups $R_1$ to $R_6$, and $R_8$ to $R_{10}$ represents an alkyl containing 1-6 carbon atoms, typically a methyl group, $R_7$ represents an organic betaine group for betaine polysiloxane, or an organic quaternary group for quaternary polysiloxane, and have different numbers of carbon atoms, and may contain a hydroxyl group or other functional groups containing N, P or S, and m and n are from 1 to 200. For example, one type of quaternary polysiloxanes is when $R_7$ is represented by the group

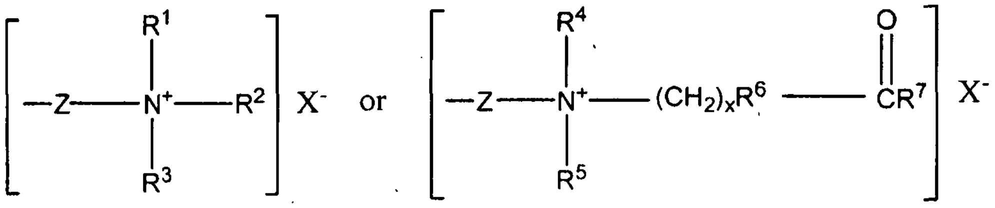

(IV)

wherein $R^1$, $R^2$, $R^3$ are alkyl groups with 1 to 22 carbon atoms or alkenyl groups with 2 to 22 carbon atoms. $R^4$, $R^5$, $R^7$ are alkyl groups with 1 to 22 carbon atoms or alkenyl groups with 2 to 22 carbon atoms; $R^6$ is -O- or the $NR^8$ group, $R^8$ being an alkyl or hydroxyalkyl group with 1 to 4 carbon atoms or a hydrogen group; Z is a bivalent hydrocarbon group with at least 4 carbon atoms, which may have a hydroxyl group and may be interrupted by an oxygen atom, an amino group or an amide group; x is 2 to 4; The $R^1$, $R^2$, $R^3$, $R^4$, $R^5$, $R^7$ may be the same or the different, and X- is an inorganic or organic anion including $Cl^-$ and $CH_3COO^-$. Examples of organic quaternary groups include [R-$N^+(CH_3)_2$-$CH_2CH(OH)CH_2$-O-$(CH_2)_3$-] ($CH_3COO^-$), wherein R is an alkyl group containing from 1-22 carbons or an benzyl radical and $CH_3COO$- an anion. Examples of organic betaine include -$(CH_2)_3$-O-$CH_2CH(OH)(CH_2)$-$N^+(CH_3)_2CH_2COO^-$. Such compounds are.commercial available. It should be understood that cationic polysiloxanes include compounds represented by formula (III), wherein $R_7$ represents other cationic groups including organic amine derivatives including organic primary, secondary and tertiary amines.

Other examples of organo-modified polysiloxanes include di-betaine polysiloxanes and di-quaternary polysiloxanes, which can be represented by the formula

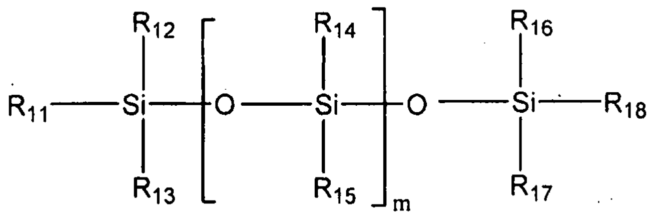

(V)

wherein the groups $R_{12}$ to $R_{17}$ each represents an alkyl containing 1-6 carbon atoms, typically a methyl group, both $R_{11}$ and $R_{18}$ group represent an organic betaine group for di-betaine polysiloxanes or an organic quaternary group for di-quaternary, and have different numbers of carbon atoms and may contain a hydroxyl group or other functional groups containing N, P or S, and m is from 1 to 200. For example, one type of di-quaternary polysiloxanes is when $R_{11}$ and $R_{18}$ are represented by the group

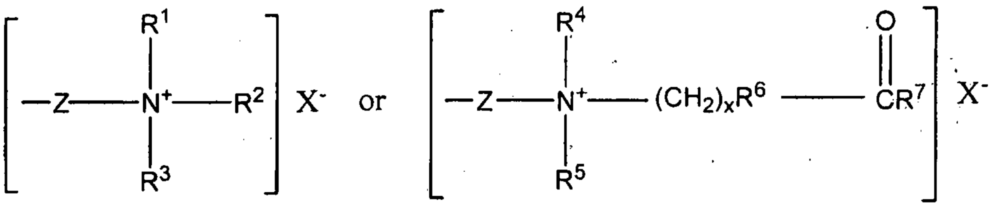

(VI)

wherein $R^1$, $R^2$, $R^3$, $R^4$, $R^5$, $R^6$, $R^7$, Z, X- and x are the same as defined above. Such compounds are commercially available.

It will be appreciated by those skilled in the art that cationic polysiloxanes include compounds represented by formula (V), wherein $R_{11}$ and $R_{18}$ represents other cationic groups including organic amine derivatives including organic primary, secondary and tertiary amines. It will be apparent to those skilled in the art that there are different mono- and di-quaternary polysiloxanes, mono- and di-betaine polysiloxanes and other organo-modified polysiloxane compounds which can be used in the present invention. These compounds are widely used in personal care and other products, for example as discussed in United States Patent Nos. 4,054,161; 4,654,161; 4,891,166; 4,898,957; 4,933,327; 5,166,297; 5,235,082; 5,306,434; 5,474,835; 5,616,758; 5,798,144; 6,277,361; 6,482,969; 6,323,268 and 6,696,052. The selection

from these references of compounds suitable for the present invention can be made by one of ordinary skill in the art through routine testing.

Another example of organosilicon compounds which can be used in the method of the present invention are fluoro-organosilane or fluro-organosiloxane compounds in which at least part of the organic radicals in the silane or siloxane compounds are fluorinated. Suitable examples are fluorinated chlorosilanes or fluorinated alkoxysilanes including 2-(n-perfluoro-octyl)ethyltriethoxysilane, perfluoro-octyldimethylchlorosilane, $(CF_3CH_2CH_2)_2Si(OCH_3)_2$, $CF_3CH_2CH_2Si(OCH_3)_3$, $(CF_3CH_2CH_2)_2Si(OCH_2CH_2OCH_3)_2$ and $CF_3CH_2CH_2Si(OCH_2CH_2OCH_3)_3$ and $(CH_3O)_3Si(CH_2)_3N^+(CH_3)_2(CH_2)_3NHC(O)(CF_2)_6CF_3Cl^-$, and tridecafluorooctyltriethoxy silane Also, compounds in which fluorocarbon groups are attached to poly(dimethylsiloxane) (PDMS) backbone including poly(methylnonafluorohexylsiloxane) can also be used. Other compounds which can be used are fluoro-substituted compounds, which contain no silicon group, for example, certain fluorocarbon compounds, in which at least part of the organic radicals are fluoronated. Among them, fluorocarbon compounds containing amphoteric or cationic groups including various amine derivatives including cationic fluoro-polymers are preferred. Some examples of cationic fluoro-polymers can be found in US patent 5,798,415. It is known that fluorocarbon compounds, and especially fluoro-organosilane or fluro-organosiloxane compounds not only significantly increase the contact angle of an aqueous liquid but also of oils, to about or greater than 90°. In other words, the methods according to the present invention can make a subterranean formation or pore surfaces not only hydrophobic but also oleophobic (oil repellent). Oleophobicity facilitates production from subterranean formations such as oil wells and also can aid in well flow back when hydrocarbon fracturing fluids are used.

Optionally, nanoparticles, for example $SiO_2$ nanoparticles, can be added into a fracturing pad fluid comprising an FEA for use in the present invention. Nanoparticles are normally considered to be particles having one or more dimensions of the order of 100 nm or less. The surface property of a nanoparticle can be either hydrophilic or hydrophobic. Adsorption of the nanoparticles on the fracture surface or proppant surface may further enhance hydrophobicity and oleophobicity. Nanoparticles of different types and sizes are commercial available and have been used to treat solid surface, in combination with hydrophobizing agents, to make highly hydrophobic or oleophobic surfaces for various applications.

There are various methods for implementing the present invention. Normally, an FEA for use in the present invention can be first mixed with a solvent and then added to a fracturing pad fluid which does not contain proppant. Alternatively, the FEA can be added to the fluid during the whole well stimulation operation. Alternatively the FEA can be used together with other surfactants. Common fracturing fluids known to the industry can be used. Among them, aqueous-based fluids including water, slick water and gelled water, and hydrocarbon-based fluids including gelled hydrocarbons are preferred.

Example 1

Two aqueous fluids, Fluid-I and Fluid-II, were prepared. Fluid-I, for comparison purposes, contains 2.0 L/$m^3$ CC-77 in water, while Fluid-II contains 0.01 L/$m^3$ of Tegopren 6924 and 2.0 L/$m^3$ CC-77 in water. Tegopren 6924 is a di-quaternary polydimethylsiloxane from BASF Corp and CC-7 is a clay stabilizer. Standard Berea sandstone core (150-200 mD) was used. The core was saturated initially with brine and the initial permeability was measured with $N_2$. The core was then treated with the fluid and the final permeability was measured with $N_2$. The confining pressure was 10.34 MPa (1,500 psi) and the temperature was 50°C. The regain permeability for Fluid-I was 33.1% while for Fluid-II was 95.2%.

Example 2

Two aqueous fluids, Fluid-I and Fluid-II, were prepared. Fluid-I, for comparison purposes, contained 2.0 L/$m^3$ CC-77 in water, while Fluid-II contained 0.01 L/$m^3$ of an amino-polysiloxane and 2.0 L/$m^3$ CC-77 in water. Standard Berea sandstone core (1-5 mD) was used. The core was saturated initially with brine and the initial permeability was measured with $N_2$. The core then was treated with the fluid and the final permeability was measured with $N_2$. The confining pressure was 17.24 MPa (2,500 psi) and the temperature was 50°C. The regain permeability for Fluid-I was 78.9% while for Fluid-II was 95.8%.

Example 3

2 ml of a solution containing 20% Tegopren 6924 and 80% of ethylene glycol monobutyl ether, 2 ml of TEGO Betaine 810 and 2 ml of CC-7 were added into 1000 ml of water containing 250 grams of 40/70 mesh fracturing sand. TEGO Betaine 810 is capryl/capramidopropyl betaine. After thoroughly mixing, the solution, designated as Fluid-II, was separated from sands and used to measure the regain permeability. For comparison, regain permeability of a solution, designated as Fluid-I, containing 2 ml/L of CC-7 and 2 ml/L of S-2 was also tested. S-2 is a non-ionic surfactant that is

commonly used for enhancing fluid recovery. Standard Berea sandstone core and 5 pore volume were used. The maximum regain permeability for Fluid-I was 78.7% while for Fluid-II was 112.1%.

## Claims

**1.** A method of altering the wettability of a subterranean formation comprising the steps of:

providing a fracturing pad fluid that does not contain a proppant with a flowback enhancing agent (FEA); and introducing the fracturing pad fluid into a subterranean formation whereby the wettability of the formation is altered, wherein the FEA is selected from a group consisting of organosiloxane, organosilane, fluoro-organosiloxane, fluoro-organosilane, and fluorocarbon compounds.

**2.** The method of claim 1, wherein:

(i) the fracturing pad fluid is an aqueous-based pad fluid or a hydrocarbon-based pad fluid; and/or
(ii) the fracturing pad fluid further comprises nanoparticles.

**3.** The method of claim 1 or 2, wherein the FEA is:

(i) an organosilane having the formula

$$R_nSiX_{(4-n)}$$

wherein R is an organic radical having 1-50 carbon atoms that may possess a functionality containing N, S, or P moieties, X is a halogen, alkoxy, acyloxy or amine and n has a value of 0-3; or
(ii) selected from a group consisting of:

$CH_3SiCl_3$, $CH_3CH_2SiCl_3$, $(CH_3)_2SiCl_2$, $(CH_3CH_2)_2SiCl_2$, $(C_6H_5)_2SiCl_2$, $(C_6H_5)SiCl_3$, $(CH_3)_3SiCl$, $CH_3HSiCl_2$, $(CH_3)_2HSiCl$, $CH_3SiBr_3$, $(C_6H_5)SiBr_3$, $(CH_3)_2SiBr_2$, $(CH_3CH_2)_2SiBr_2$, $(C_6H_5)_2SiBr_2$, $(CH_3)_3SiBr$, $CH_3HSiBr_2$; $(CH_3)_2HSiBr$, $Si(OCH_3)_4$, $CH_3Si(OCH_3)_3$, $CH_3Si(OCH_2CH_3)_3$, $CH_3Si(OCH_2CH_2CH_3)_3$, $CH_3Si[O(CH_2)_3CH_3]_3$, $CH_3CH_2Si(OCH_2CH_3)_3$, $C_6H_5Si(OCH_3)_3$, $C_6H_5CH_2Si(OCH_3)_3$, $C_6H_5Si(OCH_2CH_3)_3$, $CH_2{=}CHCH_2Si(OCH_3)_3$, $(CH_3)_2Si(OCH_3)_2$, $(CH_2{=}CH)Si(CH_3)_2Cl$, $(CH_3)_2Si(OCH_2CH_3)_2$, $(CH_3)_2Si(OCH_2CH_2CH_3)_2$, $(CH_3)_2Si[O(CH_2)_3CH_3]_2$, $(CH_3CH_2)_2Si(OCH_2CH_3)_2$, $(C_6H_5)_2Si(OCH_3)_2$, $(C_6H_5CH_2)_2Si(OCH_3)_2$, $(C_6H_5)_2Si(OCH_2CH_3)_2$, $(CH_2{=}CH)_2Si(OCH_3)_2$, $(CH_2{=}CHCH_2)_2Si(OCH_3)_2$ $(CH_3)_3SiOCH_3$, $CH_3HSi(OCH_3)_2$, $(CH_3)_2HSi(OCH_3)$, $CH_3Si(OCH_2CH_2CH_3)_3$, $CH_2{=}CHCH_2Si(OCH_2CH_2OCH_3)_3$, $(C_6H_5)_2Si(OCH_2CH_2OCH_3)_2$, $(CH_3)_2Si(OCH_2CH_2OCH_3)_2$, $(CH_2{=}CH)_2Si(OCH_2CH_2OCH_3)_2$, $(CH_2{=}CHCH_2)_2Si(OCH_2CH_2OCH_3)_2$, $(C_6H_5)_2Si(OCH_2CH_2OCH_3)_2$, $CH_3Si(CH_3COO)_3$, 3-aminotriethoxysilane, methyldiethylchlorosilane, butyltrichlorosilane, diphenyldichlorosilane, vinyltrichlorosilane, methyltrimethoxysilane, vinyltriethoxysilane, vinyltris(methoxyethoxy)silane, methacryloxypropyltrimethoxysilane, glycidoxypropyltrimethoxysilane, aminopropyltriethoxysilane, ethyltributoxysilane, isobutyltrimethoxysilane, hexyltrimethoxysilane, n-octyltriethoxysilane, dihexyldimethoxysilane, octadecyltrichlorosilane, octadecyltrimethoxysilane, octadecyldimethylchlorosilane, octadecyldimethylmethoxysilane and quaternary ammonium silanes including 3-(trimethoxysilyl)propyldimethyloctadecyl ammonium chloride, 3-(trimethoxysilyl)propyldimethyloctadecyl ammonium bromide, 3-(trimethylethoxysilylpropyl)didecylmethyl ammonium chloride, triethoxysilyl soyapropyl dimonium chloride, 3-(trimethylethoxysilylpropyl)didecylmethyl ammonium bromide, 3-(trimethylethoxysilylpropyl)didecylmethyl ammonium bromide, triethoxysilyl soyapropyl dimonium bromide, $(CH_3O)_3Si(CH_2)_3P^+(C_6H_5)_3Cl^-$, $(CH_3O)_3Si(CH_2)_3P^+(C_6H_5)_3Br$, $(CH_3O)_3Si(CH_2)_3P^+(CH_3)_3Cl^-$, $(CH_3O)_3Si(CH_2)_3P^+(C_6H_{13})_3Cl^-$, $(CH_3O)_3Si(CH_2)_3N^+(CH_3)_2C_4H_9Cl^-$, $(CH_3O)_3Si(CH_2)_3N^+(CH_3)_2CH_2C_6H_5Cl^-$, $(CH_3O)_3Si(CH_2)_3N^+(CH_3)_2CH_2CH_2OHCl^-$, $(CH_3O)_3Si(CH_2)_3N^+(C_2H_5)_3Cl^-$, $(C_2H_5O)_3Si(CH_2)_3N^+(CH_3)_2C_{18}H_{37}Cl^-$.

**4.** The method of claim 1 or 2, wherein the FEA is:

(i) an organosiloxane; or
(ii) selected from a group consisting of polyalkylsiloxanes, cationic polysiloxane, amphoteric polysiloxanes, sulfate polysiloxanes, phosphate polysiloxanes, carboxylate polysiloxanes, sulfonate polysiloxanes, and thiosulfate polysiloxanes; or

(iii) selected from a group consisting of hexamethylcyclotrisiloxane, octamethylcyclotetrasiloxane, decamethylcyclopentasiloxane, hexamethyldisiloxane, hexaethyldisiloxane, 1,3-divinyl-1,1,3,3-tetramethyldisiloxane, octamethyltrisiloxane, decamethyltetrasiloxane.

**5.** The method of claim 1 or 2, wherein the FEA is:

(i) a polyalkylsiloxane; or
(ii) a cationic polysiloxane; or
(iii) a quaternary polysiloxane; or
(iv) an amphoteric polysiloxane.

**6.** The method of claim 1 or 2, wherein the organosiloxane is:

(i) a betaine polysiloxane; or
(ii) selected from a group consisting of sulfate polysiloxane, sulfonate polysiloxane, phosphate polysiloxane, carboxylate polysiloxane and thiosulfate polysiloxane.

**7.** The method of claim 1 or 2, wherein the FEA is:

(i) a fluorocarbon compound; or
(ii) a fluoro-organosilane; or
(iii) a fluoro-organosiloxane.

**8.** The method of claim 1 or 2, wherein the FEA is:

(i) an organo-siloxane having the formule

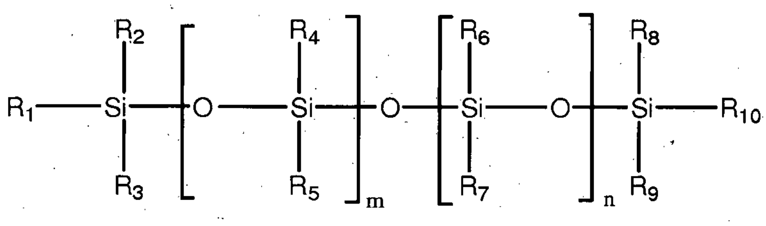

wherein each of $R_1$ to $R_6$ and $R_8$ to $R_{10}$ represents an organic radical containing 1-6 carbon atoms, typically a methyl group, $R_7$ represents an organic amphoteric group and m and n are from 1 to 200; or

(ii) an organo-siloxane having the formula

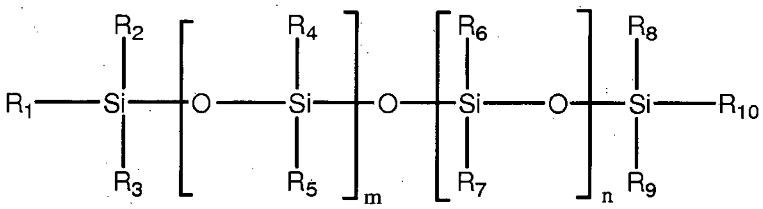

wherein each of $R_1$ to $R_6$ and $R_8$ to $R_{10}$ represents an organic radical containing 1-6 carbon atoms, typically a methyl group, $R_7$ represents an organic cationic group and m and n are from 1 to 200; or

(iii) a cationic polysiloxane having the formula

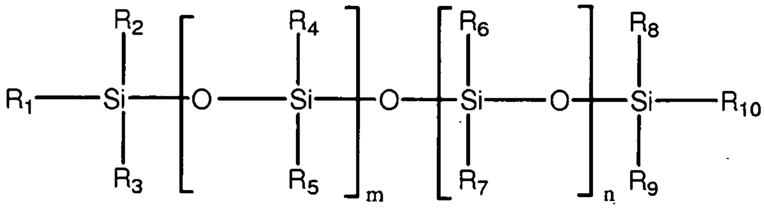

wherein each of $R_1$ to $R_6$ and $R_8$ to $R_{10}$, represents alkyl containing 1-6 carbon atoms, typically a methyl group, $R_7$ represents a quaternary group and is associated with an anionic ion and may have a hydroxyl group and may be interrupted by an oxygen atom, an amino group or an amide group, and m and n are from 1 to 200; or (iv) a betaine polysiloxane having the formula

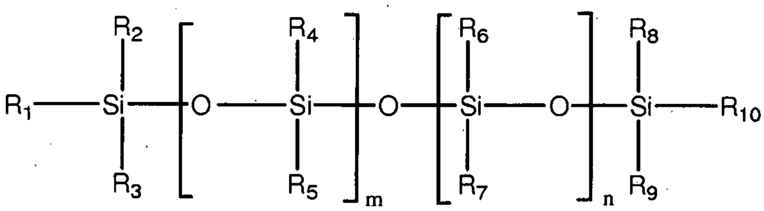

wherein each of $R_1$ to $R_6$ and $R_8$ to $R_{10}$, represents alkyl containing 1-6 carbon atoms, typically a methyl group, $R_7$ represents an organic betaine group and may have a hydroxyl group and may be interrupted by an oxygen atom, an amino group or an amide group, and m and n are from 1 to 200.

**9.** The method of claim 1 or 2, wherein the FEA is an organo-siloxane having the formula

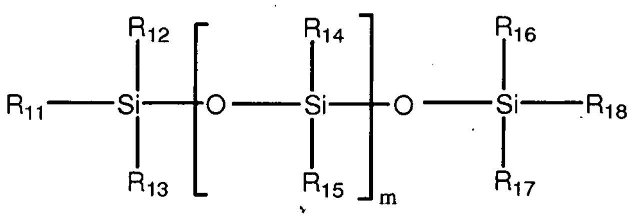

where $R_{12}$ to $R_{17}$ each represents an organic radical containing 1-6 carbon atoms, typically a methyl group, one of $R_{11}$ and $R_{18}$ represents an organic amphoteric group and the other of $R_{11}$ and $R_{18}$ represents an organic amphoteric group or an organic radical and m is from 1 to 200.

**10.** The method of claim 1 or 2, wherein the FEA is an organo-siloxane having the formula

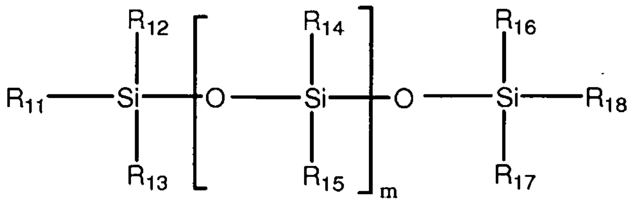

where $R_{12}$ to $R_{17}$ each represents an organic radical containing 1-6 carbon atoms, typically a methyl group, one of $R_{11}$ and $R_{18}$ represents an organic cationic group and the other of $R_{11}$ and $R_{18}$ represents an organic cationic group or an organic radical and m is from 1 to 200.

**11.** The method of claim 1 or 2, wherein the FEA is according to the formula

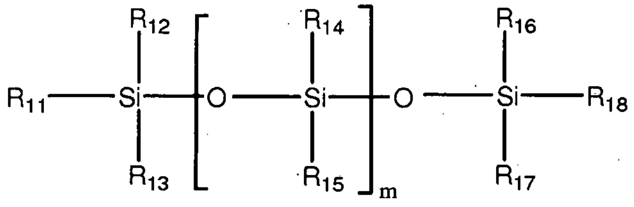

where $R_{12}$ to $R_{17}$ each represents alkyl containing 1-6 carbon atoms, typically a methyl group, $R_{11}$ and $R_{18}$ each represents an organic betaine group and may have a hydroxyl group and may be interrupted by an oxygen atom, an amino group or an amide group and m is 1 to 200.

**12.** The method of claim 1 or 2, wherein the organosiloxane is according to the formula

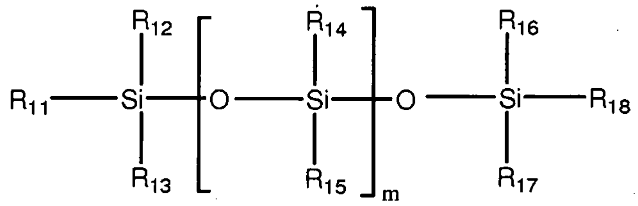

where $R_{12}$ to $R_{17}$ each represents alkyl containing 1-6 carbon atoms, typically a methyl group, $R_{11}$ and $R_{18}$ each independently represents an organic quaternary group and is associated with an anionic ion and may have a hydroxyl group and may be interrupted by an oxygen atom, an amino group or an amide group and m is 1 to 200.

**Patentansprüche**

**1.** Verfahren zum Verändern der Benetzbarkeit einer unterirdischen Formation, das folgende Schritte umfasst:

Bereitstellen eines Frackfluids, das kein Stützmittel enthält, mit einem Flowback-Verstärker (flowback enhancing agent, FEA); und
Einbringen des Frackfluids in eine unterirdische Formation, wodurch die Benetzbarkeit der Formation verändert wird, wobei der FEA aus einer Gruppe bestehend aus Organosiloxan, Organosilan, Fluororganosiloxan, Fluororganosilan und
Fluorkohlenwasserstoffverbindungen ausgewählt ist.

**2.** Verfahren nach Anspruch 1, wobei:

(i) das Frackfluid ein Frackfluid auf Wasserbasis oder ein Frackfluid auf Kohlenwasserstoffbasis ist; und/oder
(ii) das Frackfluid weiterhin Nanoteilchen umfasst.

**3.** Verfahren nach Anspruch 1 oder 2, wobei der FEA Folgendes ist:

(i) ein Organosilan mit der Formel

$$R_nSiX_{(4-n)}$$

wobei R ein organischer Rest mit 1-50 Kohlenstoffatomen ist, der eine Funktionalität besitzen kann, die N-, S- oder P-Komponenten enthält, X ein Halogen, Alkoxy, Acyloxy oder Amin ist und n einen Wert von 0-3 aufweist; oder
(ii) ausgewählt aus einer Gruppe bestehend aus:

$CH_3SiCl_3$, $CH_3CH_2SiCl_3$, $(CH_3)_2SiCl_2$, $(CH_3CH_2)_2SiCl_2$, $(C_6H_5)_2SiCl_2$, $(C_6H_5)SiCl_3$, $(CH_3)_3SiCl$, $CH_3HSiCl_2$, $(CH_3)_2HSiCl$, $CH_3SiBr_3$, $(C_6H_5)SiBr_3$, $(CH_3)_2SiBr_2$, $(CH_3CH_2)_2SiBr_2$, $(C_6H_5)_2SiBr_2$, $(CH_3)_3SiBr$, $CH_3HSiBr_2$, $(CH_3)_2HSiBr$, $Si(OCH_3)_4$, $CH_3S_1(OCH_3)_3$, $CH_3Si(OCH_2CH_3)_3$, $CH_3Si(OCH_2CH_2CH_3)_3$, $CH_3Si[O(CH_2)_3CH_3]_3$, $CH_3CH_2Si(OCH_2CH_3)_3$, $C_6H_5Si(OCH_3)_3$, $C_6H_5CH_2Si(OCH_3)_3$, $C_6H_5Si(OCH_2CH_3)_3$, $CH_2{=}CHCH_2S_1(OCH_3)_3$, $(CH_3)_2Si(OCH_3)_2$, $(CH_2{=}CH)Si(CH_3)_2Cl$, $(CH_3)_2Si(OCH_2CH_3)_2$, $(CH_3)_2Si(OCH_2CH_2CH_3)_2$, $(CH_3)_2Si[O(CH_2)_3CH_3]_2$, $(CH_3CH_2)_2Si(OCH_2CH_3)_2$, $(C_6H_5)_2Si(OCH_3)_2$, $(C_6H_5CH_2)_2Si(OCH_3)_2$, $(C_6H_5)_2Si(OCH_2CH_3)_2$, $(CH_2{=}CH)_2Si(OCH_3)_2$, $(CH_2{=}CHCH_2)_2Si(OCH_3)_2$, $(CH_3)_3SiOCH_3$, $CH_3HSi(OCH_3)_2$, $(CH_3)_2HSi(OCH_3)$, $CH_3Si(OCH_2CH_2CH_3)_3$, $CH_2{=}CHCH_2Si(OCH_2CH_2OCH_3)_3$, $(C_6H_5)_2Si(OCH_2CH_2OCH_3)_2$, $(CH_3)_2Si(OCH_2CH_2OCH_3)_2$, $(CH_2{=}CH)_2Si(OCH_2CH_2OCH_3)_2$, $(CH_2{=}CHCH_2)_2Si(OCH_2CH_2OCH_3)_2$, $(C_6H_5)_2Si(OCH_2CH_2OCH_3)_2$, $CH_3Si(CH_3COO)_3$, 3-Aminotriethoxysilan, Methyldiethylchlorsilan, Butyltrichlorsilan, Diphenyldichlorsilan, Vinyltrichlorsilan, Methyltrimethoxysilan, Vinyltriethoxysilan, Vinyltris(methoxyethoxy)silan, Methacryloxypropyltrimethoxysilan, Glycidoxypropyltrimethoxysilan, Aminopropyltriethoxysilan, Ethyltributoxysilan, Isobutyltrimethoxysilan, Hexyltrimethoxysilan, n-Octyltriethoxysilan, Dihexyldimethoxysilan, Octadecyltrichlorsilan, Octadecyltrimethoxysilan, Octadecyldimethylchlorsilan, Octadecyldimethylmethoxysilan und quartären Ammoniumsilanen, darunter 3-(Trimethoxysilyl)propyldimethyloctadecylammoniumchlorid, 3-(Trimethoxysilyl)propyldimethyloctadecylammoniumbromid, 3-(Trimethylethoxysilylpropyl)didecylmethylammoniumchlorid, Triethoxysilylsoyapropyldimoniumchlorid, 3-(Trimethylethoxysilylpropyl)didecylmethylammoniumbromid, 3-(Trimethylethoxysilylpropyl)didecylmethylammoniumbromid, Triethoxysilylsoyapropyldimoniumbromid, $(CH_3O)_3Si(CH_2)_3P^+(C_6H_5)_3Cl^-$, $(CH_3O)_3Si(CH_2)_3P^+(C_6H_5)_3Br^-$, $(CH_3O)_3Si(CH_2)_3P^+(CH_3)_3Cl^-$, $(CH_3O)_3Si(CH_2)_3P^+(C_6H_{13})_3Cl^-$, $(CH_3O)_3Si(CH_2)_3N^+(CH_3)_2C_4H_9Cl^-$, $(CH_3O)_3Si(CH_2)_3N^+(CH_3)_2CH_2C_6H_5Cl^-$, $(CH_3O)_3Si(CH_2)_3N^+(CH_3)_2CH_2CH_2OHCl^-$, $(CH_3O)_3Si(CH_2)_3N^+(C_2H_5)_3Cl^-$, $(C_2H_5O)_3Si(CH_2)_3N^+(CH_3)_2C_{18}H_{37}Cl^-$.

**4.** Verfahren nach Anspruch 1 oder 2, wobei der FEA Folgendes ist:

(i) ein Organosiloxan; oder
(ii) aus einer Gruppe bestehend aus Polyalkylsiloxanen, kationischem Polysiloxan, amphoteren Polysiloxanen, Sulfatpolysiloxanen, Phosphatpolysiloxanen, Carboxylatpolysiloxanen, Sulfonatpolysiloxanen und Thiosulfatpolysiloxanen ausgewählt; oder
(iii) aus einer Gruppe bestehend aus Hexamethylcyclotrisiloxan, Octamethylcyclotetrasiloxan, Decamethylcyclopentasiloxan, Hexamethyldisiloxan, Hexaethyldisiloxan, 1,3-Divinyl-1,1,3,3-tetramethyldisiloxan, Octamethyltrisiloxan, Decamethyltetrasiloxan ausgewählt.

**5.** Verfahren nach Anspruch 1 oder 2, wobei der FEA Folgendes ist:

(i) ein Polyalkylsiloxan; oder
(ii) ein kationisches Polysiloxan; oder
(iii) ein quartäres Polysiloxan; oder
(iv) ein amphoteres Polysiloxan.

**6.** Verfahren nach Anspruch 1 oder 2, wobei das Organosiloxan Folgendes ist:

(i) ein Betainpolysiloxan; oder
(ii) aus einer Gruppe bestehend aus Sulfatpolysiloxan, Sulfonatpolysiloxan, Phosphatpolysiloxan, Carboxylatpolysiloxan und Thiosulfatpolysiloxan ausgewählt.

**7.** Verfahren nach Anspruch 1 oder 2, wobei der FEA Folgendes ist:

(i) eine Fluorkohlenwasserstoffverbindung; oder
(ii) ein Fluororganosilan; oder
(iii) ein Fluororganosiloxan.

**8.** Verfahren nach Anspruch 1 oder 2, wobei der FEA Folgendes ist:

(i) ein Organosiloxan mit der Formel

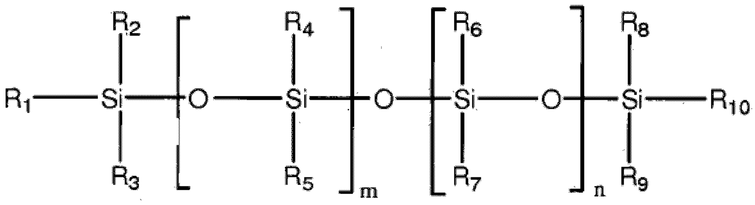

wobei $R_1$ bis $R_6$ und $R_8$ bis $R_{10}$ jeweils einen 1-6 Kohlenstoffatome enthaltenden organischen Rest, typischerweise eine Methylgruppe, darstellen, $R_7$ eine organische amphotere Gruppe darstellt und m und n 1 bis 200 betragen; oder

(ii) ein Organosiloxan mit der Formel

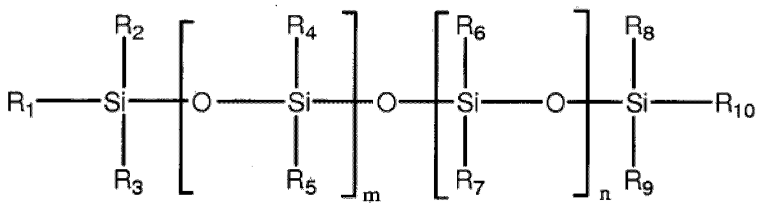

wobei $R_1$ bis $R_6$ und $R_8$ bis $R_{10}$ jeweils einen 1-6 Kohlenstoffatome enthaltenden organischen Rest, typischerweise eine Methylgruppe, darstellen, $R_7$ eine organische kationische Gruppe darstellt und m und n 1 bis 200 betragen; oder

(iii) ein kationisches Polysiloxan mit der Formel

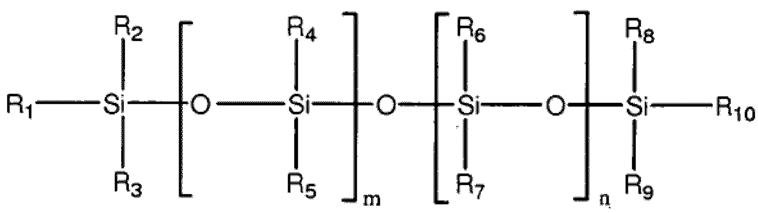

wobei $R_1$ bis $R_6$ und $R_8$ bis $R_{10}$ jeweils 1-6 Kohlenstoffatome enthaltendes Alkyl, typischerweise eine Methylgruppe, darstellen, $R_7$ eine quartäre Gruppe darstellt und einem Anion zugeordnet ist und eine Hydroxygruppe aufweisen kann und durch ein Sauerstoffatom, eine Aminogruppe oder eine Amidgruppe unterbrochen sein kann und m und n 1 bis 200 betragen; oder

(iv) ein Betainpolysiloxan mit der Formel

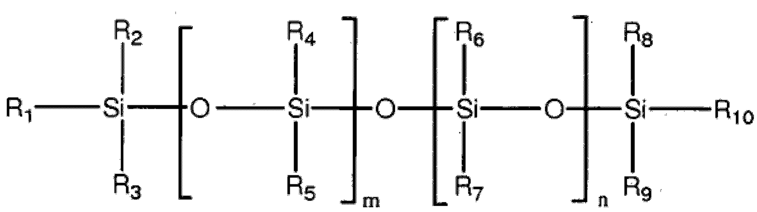

wobei $R_1$ bis $R_6$ und $R_8$ bis $R_{10}$ jeweils 1-6 Kohlenstoffatome enthaltendes Alkyl, typischerweise eine Methylgruppe, darstellen, $R_7$ eine organische Betaingruppe darstellt und eine Hydroxygruppe aufweisen kann und durch ein Sauerstoffatom, eine Aminogruppe oder eine Amidgruppe unterbrochen sein kann und m und n 1 bis

200 betragen.

**9.** Verfahren nach Anspruch 1 oder 2, wobei der FEA ein Organosiloxan mit folgender Formel ist:

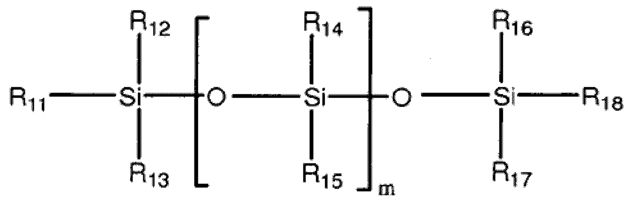

wobei $R_{12}$ bis $R_{17}$ jeweils einen 1-6 Kohlenstoffatome enthaltenden organischen Rest, typischerweise eine Methylgruppe, darstellen, einer von $R_{11}$ und $R_{18}$ eine organische amphotere Gruppe darstellt und der andere von $R_{11}$ und $R_{18}$ eine organische amphotere Gruppe oder einen organischen Rest darstellt und m 1 bis 200 beträgt.

**10.** Verfahren nach Anspruch 1 oder 2, wobei der FEA ein Organosiloxan mit folgender Formel ist:

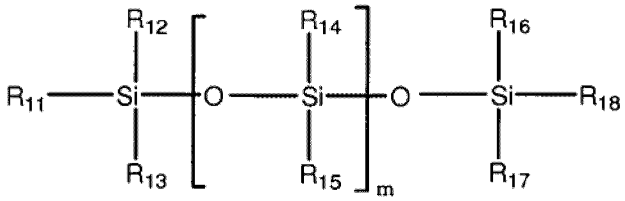

wobei $R_{12}$ bis $R_{17}$ jeweils einen 1-6 Kohlenstoffatome enthaltenden organischen Rest, typischerweise eine Methylgruppe, darstellen, einer von $R_{11}$ und $R_{18}$ eine organische kationische Gruppe darstellt und der andere von $R_{11}$ und $R_{18}$ eine organische kationische Gruppe oder einen organischen Rest darstellt und m 1 bis 200 beträgt.

**11.** Verfahren nach Anspruch 1 oder 2, wobei der FEA folgender Formel entspricht:

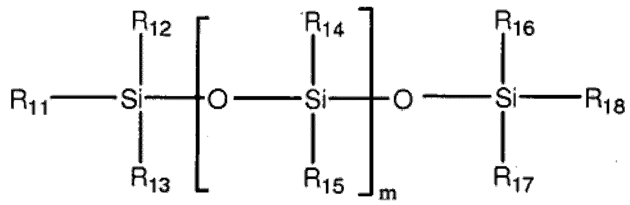

wobei $R_{12}$ bis $R_{17}$ jeweils 1-6 Kohlenstoffatome enthaltendes Alkyl, typischerweise eine Methylgruppe, darstellen, $R_{11}$ und $R_{18}$ jeweils eine organische Betaingruppe darstellen und eine Hydroxygruppe aufweisen können und durch ein Sauerstoffatom, eine Aminogruppe oder eine Amidgruppe unterbrochen sein können und m 1 bis 200 beträgt.

**12.** Verfahren nach Anspruch 1 oder 2, wobei das Organosiloxan folgender Formel entspricht:

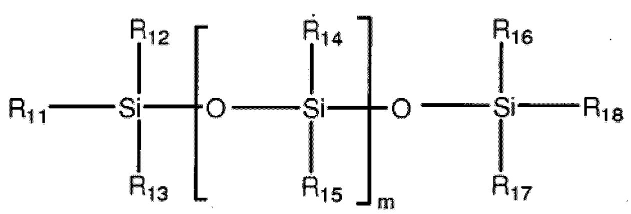

wobei $R_{12}$ bis $R_{17}$ jeweils 1-6 Kohlenstoffatome enthaltendes Alkyl, typischerweise eine Methylgruppe, darstellen, $R_{11}$ und $R_{18}$ jeweils unabhängig eine organische quartäre Gruppe darstellen und einem Anion zugeordnet sind und eine Hydroxygruppe aufweisen können und durch ein Sauerstoffatom, eine Aminogruppe oder eine Amidgruppe unterbrochen sein können und m 1 bis 200 beträgt.

## Revendications

**1.** Procédé de modification de la mouillabilité d'une formation souterraine comprenant les étapes de :

fourniture d'un fluide de socle de fracturation qui ne contient pas d'agent de soutènement avec un agent accentuant le regorgement (ARG) ; et
l'introduction du fluide de socle de fracturation dans une formation souterraine, moyennant quoi la mouillabilité de la formation est modifiée, dans lequel l'ARG est choisi dans un groupe consistant en un organosiloxane, un organosilane, un fluoro-organosiloxane, un fluoro-organosilane, et des composés fluorocarbonés.

**2.** Procédé selon la revendication 1, dans lequel :

(i) le fluide de socle de fracturation est un fluide de socle à base aqueuse ou un fluide de socle à base d'hydrocarbure ; et/ou
(ii) le fluide de socle de fracturation comprend en outre des nanoparticules.

**3.** Procédé selon la revendication 1 ou 2, dans lequel l'ARG est :

(i) un organosilane ayant la formule

$$R_nSiX_{(4-n)}$$

dans laquelle R est un radical organique comportant 1 à 50 atomes de carbone qui peut posséder une fonctionnalité contenant des fractions N, S ou P, X est un halogène, un alcoxy, un acyloxy ou une amine et n a une valeur de 0 à 3 ; ou
(ii) choisi dans un groupe consistant en :

$CH_3SiCl_3$, $CH_3CH_2SiCl_3$, $(CH_3)_2SiCl_2$, $(CH_3CH_2)_2SiCl_2$, $(C_6H_5)_2SiCl_2$, $(C_6H_5)SiCl_3$, $(CH_3)_3SiCl$, $CH_3HSiCl_2$, $(CH_3)_2HSiCl$, $CH_3SiBr_3$, $(C_6H_5)SiBr_3$, $(CH_3)_2SiBr_2$, $(CH_3CH_2)_2SiBr_2$, $(C_6H_5)_2SiBr_2$, $(CH_3)_3SiBr$, $CH_3HSiBr_2$, $(CH_3)_2HSiBr$, $Si(OCH_3)_4$, $CH_3Si(OCH_3)_3$, $CH_3Si(OCH_2CH_3)_3$, $CH_3Si(OCH_2CH_2CH_3)_3$, $CH_3Si[O(CH_2)_3CH_3]_3$, $CH_3CH_2Si(OCH_2Cl_3)_3$, $C_6H_5Si(OCH_3)_3$, $C_6H_5CH_2Si(OCH_3)_3$, $C_6H_5Si(OCH_2CH_3)_3$, $CH_2{=}CHCH_2Si(OCH_3)_3$, $(CH_3)_2Si(OCH_3)_2$, $(CH_2{=}CH)Si(CH_3)_2Cl$, $(CH_3)_2Si(OCH_2CH_3)_2$, $(CH_3)_2Si(OCH_2CH_2CH_3)_2$, $(CH_3)_2Si[O(CH_2)_3CH_3]_2$, $(CH_3CH_2)_2Si(OCH_2CH_3)_2$., $(C_6H_5)_2Si(OCH_3)_2$, $(C_6H_5CH_2)_2Si(OCH_3)_2$, $(C_6H_5)_2Si(OCH_2CH_3)_2$, $(CH_2{=}CH)_2Si(OCH_3)_2$, $(CH_2{=}CHCH_2)_2Si(OCH_3)_2$, $(CH_3)_3SiOCH_3$, $CH_3HSi(OCH_3)_2$, $(CH_3)_2HSi(OCH_3)$, $CH_3Si(OCH_2CH_2CH_3)_3$, $CH_2{=}CHCH_2Si(OCH_2CH_2OCH_3)_3$, $(C_6H_5)_2Si(OCH_2CH_2OCH_3)_2$, $(CH_3)_2Si(OCH_2CH_2OCH_3)_2$, $(CH_2{=}CH)_2Si(OCH_2CH_2OCH_3)_2$, $(CH_2{=}CHCH_2)_2Si(OCH_2CH_2OCH_3)_2$, $(C_6H_5)_2Si(OCH_2CH_2OCH_3)_2$, $CH_3Si(CH_3COO)_3$, 3-aminotriéthoxysilane, méthyldiéthylchlorosilane, butyltrichlorosilane, diphényldichlorosilane, vinyltrichlorosilane, méthyltriméthoxysilane, vinyltriéthoxysilane, vinyltris(méthoxyéthoxy)silane, méthacryloxypropyltriméthoxysilane, glycidoxypropyltriméthoxysilane, aminopropyltriéthoxysilane, éthyltributoxysilane, isobutyltriméthoxysilane, hexyltriméthoxysilane, n-octyltriéthoxysilane, dihexyldiméthoxysilane, octadécyltrichlorosilane, octadécyltriméthoxysilane, octadécyldiméthylchlorosilane, octadécyldiméthylméthoxysilane et des silanes d'ammonium quaternaire dont le chlorure de 3-(triméthoxysilyl)propyldiméthyloctadécylammonium, le bromure de 3-(triméthoxysilyl)propyldiméthyloctadécylammonium, le chlorure de 3-(triméthyléthoxysilylpropyl)didécylméthylammonium, le chlorure de triéthoxysilylsoyapropyldimonium, le bromure de 3-(triméthyléthoxysilylpropyl)didécylméthylammonium, le bromure de 3-(triméthyléthoxysilylpropyl)didécylméthylammonium, le bromure de triéthoxysilylsoyapropyldimonium, $(CH_3O)_3Si(CH_2)_3P^+(C_6H_5)_3Cl^-$, $(CH_3O)_3Si(CH_2)_3P^+(C_6H_5)_3Br^-$, $(CH_3O)_3Si(CH_2)_3P^+(CH_3)_3Cl^-$, $(CH_3O)_3Si(CH_2)_3P^+(C_6H_{13})_3Cl^-$, $(CH_3O)_3Si(CH_2)_3N^+(CH_3)_2C_4H_9Cl^-$, $(CH_3O)_3Si(CH_2)_3N^+(CH_3)_2CH_2C_6H_5Cl^-$, $(CH_3O)_3Si(CH_2)_3N^+(CH_3)_2CH_2CH_2OHCl^-$, $(CH_3O)_3Si(CH_2)_3N^+(C_2H_5)_3Cl^-$, $(C_2H_5O)_3Si(CH_2)_3N^+(CH_3)_2C_{18}H_{37}Cl^-$.

**4.** Procédé selon la revendication 1 ou 2, dans lequel l'ARG est :

(i) un organosiloxane ; ou
(ii) choisi dans un groupe consistant en les polyalkylsiloxanes, un polysiloxane cationique, les polysiloxanes amphotères, les polysiloxanes de sulfate, les polysiloxanes de phosphate, les polysiloxanes de carboxylate, les polysiloxanes de sulfonate, et les polysiloxanes de thiosulfate ; ou
(iii) choisi dans un groupe consistant en l'hexaméthylcyclotrisiloxane, l'octaméthylcyclotétrasiloxane, le décaméthylcyclopentasiloxane, l'hexaméthyldisiloxane, l'hexaéthyldisiloxane, le 1,3-divinyl-1,1,3,3-tétraméthyldisiloxane, l'octaméthyltrisiloxane, le décaméthyltétrasiloxane.

**5.** Procédé selon la revendication 1 ou 2, dans lequel l'ARG est :

(i) un polyalkylsiloxane ; ou
(ii) un polysiloxane cationique ; ou
(iii) un polysiloxane quaternaire ; ou
(iv) un polysiloxane amphotère.

**6.** Procédé selon la revendication 1 ou 2, dans lequel l'organosiloxane est :

(i) un polysiloxane de bétaïne ; ou
(ii) choisi dans un groupe consistant en un polysiloxane de sulfate, un polysiloxane de sulfonate, un polysiloxane de phosphate, un polysiloxane de carboxylate et un polysiloxane de thiosulfate.

**7.** Procédé selon la revendication 1 ou 2, dans lequel l'ARG est :

(i) un composé fluorocarboné ; ou
(ii) un fluoro-organosilane ; ou
(iii) un fluoro-organosiloxane.

**8.** Procédé selon la revendication 1 ou 2, dans lequel l'ARG est :

(i) un organo-siloxane ayant la formule

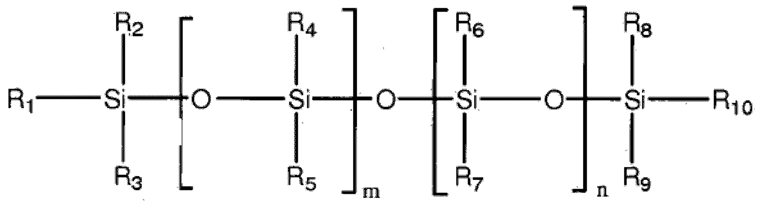

dans laquelle chacun de $R_1$ à $R_6$ et $R_8$ à $R_{10}$ représente un radical organique contenant 1 à 6 atomes de carbone, typiquement un groupe méthyle, $R_7$ représente un groupe amphotère organique et m et n valent de 1 à 200 ; ou
(ii) un organo-siloxane ayant la formule

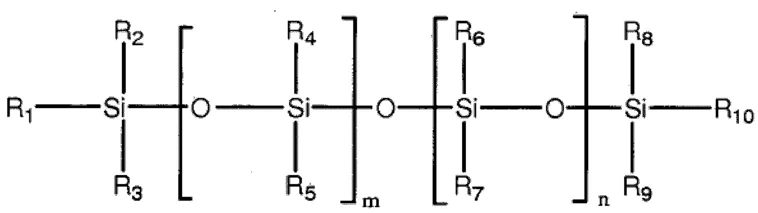

dans laquelle chacun de $R_1$ à $R_6$ et $R_8$ à $R_{10}$ représente un radical organique contenant 1 à 6 atomes de carbone, typiquement un groupe méthyle, $R_7$ représente un groupe cationique organique et m et n valent de 1 à 200 ; ou

(iii) un polysiloxane cationique ayant la formule

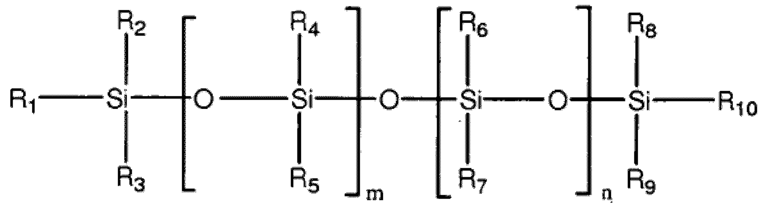

dans laquelle chacun de $R_1$ à $R_6$ et $R_8$ à $R_{10}$ représente un alkyle contenant 1 à 6 atomes de carbone, typiquement un groupe méthyle, $R_7$ représente un groupe quaternaire et est associé à un ion anionique et peut comporter un groupe hydroxyle et peut être interrompu par un atome d'oxygène, un groupe amino ou un groupe amide, et m et n valent de 1 à 200 ; ou

(iv) un polysiloxane de bétaïne ayant la formule

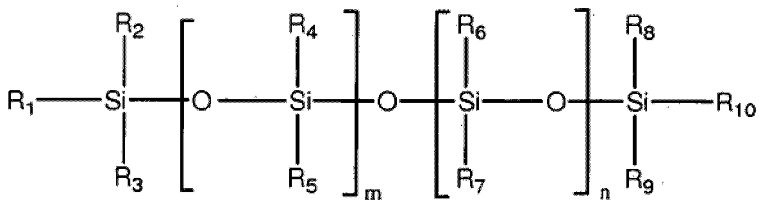

dans laquelle chacun de $R_1$ à $R_6$ et $R_8$ à $R_{10}$ représente un alkyle contenant 1 à 6 atomes de carbone, typiquement un groupe méthyle, $R_7$ représente un groupe bétaïne organique et peut comporter un groupe hydroxyle et peut être interrompu par un atome d'oxygène, un groupe amino ou un groupe amide, et m et n valent de 1 à 200.

**9.** Procédé selon la revendication 1 ou 2, dans lequel l'ARG est un organo-siloxane ayant la formule

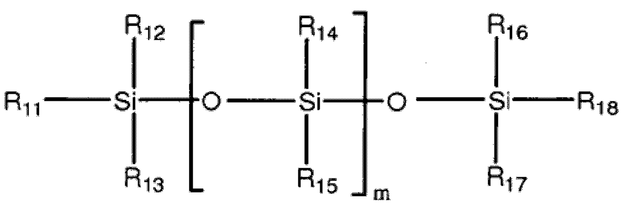

où $R_{12}$ à $R_{17}$ représentent chacun un radical organique contenant 1 à 6 atomes de carbone, typiquement un groupe méthyle, l'un de $R_{11}$ et $R_{18}$ représente un groupe amphotère organique et l'autre de $R_{11}$ et $R_{18}$ représente un groupe amphotère organique ou un radical organique et m vaut de 1 à 200.

**10.** Procédé selon la revendication 1 ou 2, dans lequel l'ARG est un organo-siloxane ayant la formule

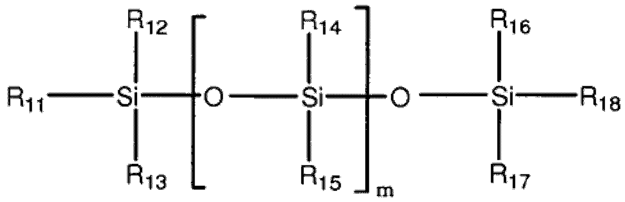

où $R_{12}$ à $R_{17}$ représentent chacun un radical organique contenant 1 à 6 atomes de carbone, typiquement un groupe méthyle, l'un de $R_{11}$ et $R_{18}$ représente un groupe cationique organique et l'autre de $R_{11}$ et $R_{18}$ représente un groupe cationique organique ou un radical organique et m vaut de 1 à 200.

**11.** Procédé selon la revendication 1 ou 2, dans lequel l'ARG est selon la formule

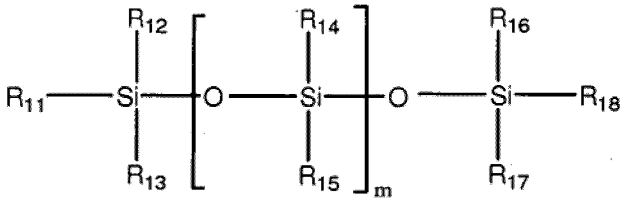

où $R_{12}$ à $R_{17}$ représentent chacun un alkyle contenant 1 à 6 atomes de carbone, typiquement un groupe méthyle, $R_{11}$ et $R_{18}$ représentent chacun un groupe bétaïne organique et peut comporter un groupe hydroxyle et peut être interrompu par un atome d'oxygène, un groupe amino ou un groupe amide et m vaut 1 à 200.

**12.** Procédé selon la revendication 1 ou 2, dans lequel l'organosiloxane est selon la formule

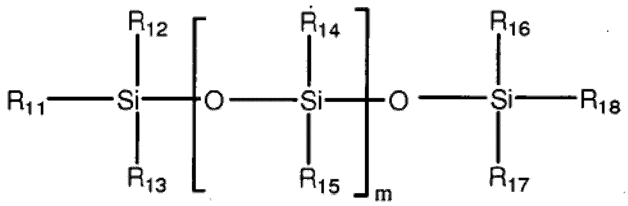

où $R_{12}$ à $R_{17}$ représentent chacun un alkyle contenant 1 à 6 atomes de carbone, typiquement un groupe méthyle, $R_{11}$ et $R_{18}$ représentent chacun indépendamment un groupe quaternaire organique et sont associés à un ion anionique et peuvent comporter un groupe hydroxyle et peuvent être interrompus par un atome d'oxygène, un groupe amino, ou un groupe amide et m vaut 1 à 200.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2006116868 A
- WO 2007033489 A
- WO 2008131540 A
- US 4537595 A
- US 5240760 A
- US 5798144 A
- US 6323268 B
- US 6403163 B
- US 6524597 B
- US 6830811 B
- US 4046795 A
- US 4564456 A
- US 4689085 A
- US 4960845 A
- US 5098979 A
- US 5149765 A
- US 5209775 A
- US 5256805 A
- US 5359104 A
- US 6132638 A
- CA 2213168
- US 4054161 A
- US 4654161 A
- US 4891166 A
- US 4898957 A
- US 4933327 A
- US 5166297 A
- US 5235082 A
- US 5306434 A
- US 5474835 A
- US 5616758 A
- US 6277361 B
- US 6482969 B
- US 6696052 B
- US 5798415 A


### Non-patent literature cited in the description


- **RANDAL M. HILL.** *Silicone Surfactants,* 1999